# EUROPÄISCHE PATENTANMELDUNG

(11) **EP 2 444 171 A1**
(43) Veröffentlichungstag der Anmeldung: **25.04.2012**
(21) Anmeldenummer: 10188451.8
(22) Anmeldetag: 22.10.2010
(51) Int. Cl.: B21C 47/24, B61B 13/00, B65G 35/06, B66F 9/06

(54) **Transportsystem, Transportwagen und Verfahren zum Transport von Metallbunde**

(71) Anmelder: Siemens VAI Metals Technologies GmbH, 4031 Linz (AT)
(72) Erfinder: Hofer, Roland, 4204 Reichenau (AT); Gatterbauer, Roland, 4020 Linz (AT)
(74) Vertreter: Maier, Daniel Oliver

(57) **Zusammenfassung**

Transportsystem zum Transport von Metallbunde (4), insbesondere Warmbunde, umfassend:
- ein mehrsträngiges Schienensystem (17);
- mehrere führerlose Transportwagen (11), welche mittels einer Antriebseinrichtung (22) auf dem Schienensystem (17) verfahrbar sind und mit einer bordseitig angeordneten Kommunikationseinrichtung (31) ausgestattet sind;
- eine Ortungseinrichtung (23), mit welcher zu jedem auf dem Schienensystem (17) befindlichen Transportwagen (11) eine aktuelle Ortsinformation ermittelbar ist;
- eine zentrale Steuereinrichtung (40), welcher die Ortsinformation eines jeden Transportwagens (11) zuführbar ist, wobei zwischen der Steuereinrichtung (40) und der Kommunikationseinrichtung (31) eine Kommunikationsverbindung (19) herstellbar ist, welche zumindest abschnittsweise leitungslos ausgebildet ist.
Die Erfindung betrifft weiterhin ein Verfahren zum transport von Metallbunde und einen Transportwagen.

## Beschreibung

### Technisches Gebiet

Die Erfindung betrifft ein Transportsystem, einen Transportwagen und ein Verfahren zum Transport von Metallbunde, insbesondere Warmbunde.

### Stand der Technik

Es ist bekannt, dass bei der Herstellung aber auch bei der Bearbeitung von metallischen Bändern Transportfahrzeuge verwendet werden, um beispielsweise das zu einem Bund, auch als Coil bezeichnet, gewickelte Metallband von der Aufwicklung weg und hin zu verschiedenen Bearbeitungsstationen zu transportieren. In den einzelnen Bearbeitungsstationen werden die Metallbunde nachbearbeitet, beispielsweise gebunden, markiert, gewogen und inspiziert, bevor sie zu einer Lager- oder Verladestation kommen. Ein Warmbund aus einer Walzstraße hat üblicherweise eine Temperatur von bis zu 850°C und ein Gewicht von bis zu 45 t. Verwendet werden dabei unterschiedliche Fördervorrichtungen, wie schienengeführte Fahrzeuge, so genannte Bundtransport-Wagen, kurz Transportwagen, Ketten- und Hubbalken-Fördereinrichtungen, die allesamt in ihrer Herstellung, aber auch bei Betrieb oft sehr aufwändig sind.

In Walzwerken fahren Transportwagen üblicherweise auf einem Gleis, das im Fundament der Werkshalle verankerten ist. Das Schienensystem besteht aus im Wesentlichen gerade verlaufenden Gleisabschnitten. An Kreuzungspunkten ermöglicht ein Drehtisch eine Änderung des Verkehrsweges auf einen bezüglich des Zulaufs anders gerichteten Streckenabschnitt.

In modernen Warmbandstrassen tritt zunehmend das Problem kurzer Bundfolgezeiten auf, da die Taktzeiten immer kürzer werden. Bekannte Fördereinrichtungen können ein Taktmaß für den Bundabtransport von unter einer Minute kaum erbringen und sind zudem wenig flexibel. Es besteht daher ein Bedarf nach einem Transportsystem, welches eine größere Verfügbarkeit und höhere Flexibilität aufweist.

Außerdem kommt es bei bekannten Transportsystemen wegen der kurzen Taktzeiten bei der Aufnahme und Ablage der Blechbunde durch das erforderliche Umheben oftmals zu Beschädigungen der Coils. Die Herstellungsqualität des Metallbandes ist dadurch beeinträchtigt.

### Darstellung der Erfindung

Es ist eine Aufgabe der vorliegenden Erfindung eine Einrichtung und ein Verfahren zum Transport von Metallbunde anzugeben, mithilfe dessen ein Transport mit hoher Verfügbarkeit und hoher Flexibilität möglich ist und bei dem es auch bei vergleichsweise kurzen Bundfolgezeiten nicht zu einer Beschädigung der Metallbunde kommt.

Diese Aufgabe wird bezüglich eines Transportsystems mit den Merkmalen des Patentanspruchs 1, bezüglich eines Verfahrens durch die Merkmale des Patentanspruchs 11 und bezüglich eines Transportwagens gemäß den Merkmalen des Anspruchs 21 gelöst. Vorteilhafte Ausgestaltungen der Erfindung sind in den jeweils abhängigen Ansprüchen definiert.

Der Erfindung liegt der Gedanke zu Grunde, zum Transport von Metallbunde mehrere führerlose Transportwagen zu verwenden, welche mittels einer Antriebsvorrichtung auf einem aus zumindest zwei Schienensträngen bestehenden Schienensystem verfahrbar sind, wobei jeder dieser Transportwagen mit einer Kommunikationseinrichtung ausgestattet ist, so dass der Transportvorgang durch Übermittlung von Steuerinformationen, die eine zentrale Steuereinrichtung unter Berücksichtigung der aktuellen Ortsinformation eines jeden Transportwagens, bereitstellt, steuerbar ist, wobei die Datenübertragung zwischen der mobilen Kommunikationseinrichtung und der Steuereinrichtung zumindest in einem Abschnitt leitungslos ausgebildet ist. Dadurch ist der Transport von der Ferne aus steuerbar und weist eine hohe Verfügbarkeit und Flexibilität auf.

Das erfindungsgemäße Transportsystem umfasst:
- ein mehrsträngiges Schienensystem ;
- mehrere führerlose Transportwagen, welche mittels einer Antriebseinrichtung auf dem Schienensystem verfahrbar sind und mit einer bordseitig angeordneten Kommunikationseinrichtung ausgestattet sind;
- eine Ortungseinrichtung, mit welcher zu jedem auf dem Schienensystem befindlichen Transportwagen eine aktuelle Ortsinformation ermittelbar ist;
- eine zentrale Steuereinrichtung, welcher die Ortsinformation eines jeden Transportwagens zuführbar ist, wobei zwischen der Steuereinrichtung und der Kommunikationseinrichtung eine Kommunikationsverbindung herstellbar ist, welche zumindest abschnittsweise leitungslos ausgebildet ist.

Die Antriebseinrichtung kann beispielsweise aus einem mechanischen Getriebe, einem Elektromotor mit Leistungselektronik und gegebenenfalls einer Steuer- und Regeleinrichtung bestehen. Die bordseitig angeordnete Kommunikationseinrichtung kann beispielsweise durch ein Funkmodul mit einer entsprechenden Antenne gebildet sein. Die Ortungseinrichtung kann nach unterschiedlichen Prinzipien arbeiten, beispielsweise nach dem Prinzip einer Feldstärkenmessung, z.B. mit mehreren in einer Fabrikhalle angeordneten WLAN-Funksendern mittels derer die Ortsinformation nach dem Prinzip der Dreieckspeilung ermittelt wird. Die Ermittlung der Ortsinformation kann aber auch teilweise oder vollständig durch ein bordseitiges Ortungsgerät erfolgen. Die Kommunikationseinrichtung und die bordseitige Ortungseinrichtung können vorteilhaft in einem einzigen Bordgerät zusammengefasst sein. Von Bedeutung ist lediglich, dass mittels der Ortungseinrichtung der Aufenthaltsort eines jeden Transportwagens ermittelbar ist und diese Information einer steuernden Zentrale zugeführt werden kann. Die Kommunikationseinrichtung ist erfindungsgemäß so konstruiert, dass jeder Wagen drahtlos mit stationären Sende- und Empfangseinrichtungen kommunizieren kann. Das erfindungsgemäße Transportsystem ermöglicht daher eine vom Beladungszustand abhängige Zuordnung der Transportwagen auf den einzelnen Strängen eines mehrsträngigen Schienensystems. Dadurch ist der Ablauf des Transportes von der Ferne aus so steuerbar, dass eine Anpassung an den jeweiligen Bedarf möglich ist. Die zentrale Koordination des Transportvorgangs ermöglicht zudem eine hohe Flexibilität. Das Transportsystem kann als Buffer oder Zwischenspeicher wirken, der es möglich macht, Fördergut zeitweise aus dem Transportweg auszuschleusen. Beim Ausschleusen kann das Transportgut auf dem Transportwagen liegen bleiben, z.B. wenn dieser samt einem Schienenstrang-Segment, quer zum Transportweg heraus verschoben wird. Da das Transportgut nicht mehr wie bislang üblich von einer Vielzahl unterschiedlich konstruierter Transport- oder Fördervorrichtung gefasst werden muss, ist das Risiko der Beschädigung geringer. Die Verfügbarkeit und Effizienz des Transportsystems ist dadurch vergleichsweise besser.

In einer bevorzugten Ausführungsform kann vorgesehen sein, dass die leitungslose Kommunikationsverbindung über einen oder mehrere trassenseitig angeordnete Leckwellenleiter erfolgt. Die Informationsübermittlung zwischen einer mobilen Kommunikationseinrichtung und ortsfest angeordneten Leckwellenleiter erfolgt durch elektromagnetische Wellen, deren Sende- und Empfangseinrichtung an die räumlichen Gegebenheiten vorteilhaft angepasst werden kann. Längs des Transportweges kommen vorteilhaft mehrere dieser Leckwellenleiter zum Einsatz. Die an sich bekannte Technologie der Leckwellenleiter bringt für die hier vorliegende Aufgabenstellung eine Reihe von Vorteilen mit sich, denn sie ermöglicht nicht nur eine berührungslose und verschleißfrei Informationsübermittlung, sondern auch eine stabile und sichere Datenübertragung unter sehr rauen Umgebungsbedingungen, wie sie bei der Stahlerzeugung in Fabrikhallen und Walzstraßen vorherrschen. Zur drahtlosen Kommunikation können weitgehend marktübliche Geräte verwendet werden, wie sie beispielsweise für ein lokales Funknetz gemäß dem Standard Wireless Local Area Network (Wireless LAN, W-Lan, WLAN) bekannt sind. WLAN-Funknetze sind im IEEE-Standard der Familie 802.11 beschrieben und brauchen hier nicht näher erläutert zu werden. Besonders geeignet ist für den rauen Industrie-Alltag eines Walzwerkes insbesondere der Industrial Wireless LAN (IWLAN)-Standard, wie er beispielsweise durch Komponenten von SIMATIK NET der Firma Siemens kommerziell erhältlich ist.

Hierbei kann es günstig sein, wenn der zumindest eine Leckwellenleiter signalleitend mit einer Basisstation verbunden ist. Dadurch ist die Einbindung in ein Datennetz mit einer im Netz stationär angeordneten zentralen Steuereinrichtung möglich. Diese zentrale Steuereinrichtung kann z.B. ein Computer oder eine auf mehrere Computer verteilte Software-Plattform sein. Der Steuereinrichtung ist der Aufenthaltsort eines jeden Transportwagens bekannt und kann damit auf unvorhergesehene Engpässe differenzierte reagieren. Kommt es beispielsweise bei einer Be- oder Verarbeitungsstation zu einer Verzögerung oder einem Ausfall, so muss dies nicht zu einer den Transportablauf limitierenden Engstelle führen, sondern anlaufende Transportwagen können leichter als bisher umgelenkt oder ausgeschleust werden. Dies erhöht die Verfügbarkeit und Effizienz des Transportsystems. Auf einem Streckenabschnitt eines Schienensystems können sich mehrere Bundtransport-Wagen gleichzeitig bewegen, wobei der Abstand zwischen den Transportwagen unterschiedlich gewählt werden kann, z.B. je nach dem, wie viel Bandmaterial bei der Haspel anfällt. Dies begünstigt die vorteilhafte Pufferwirkung. Es können vergleichsweise kurze Bundfolgezeiten realisiert werden. Leckwellenleiter sind, wie bereits gesagt, an sich bekannte Bauelemente und werden bevorzugt zur berührungslosen Datenkommunikation für mobile Teilnehmer eingesetzt, die sich auf vordefinierten Strecken fortbewegen, wie beispielsweise in einem Tunnel oder bei schienengebundenen Fahrzeugen, z.B. entlang des Fahrweges von Einschienenhängebahnen. Die Leckwellenleiter-Technologie ermöglicht einen berührungslosen Datenaustausch zwischen einem Transportwagen und einer abgesetzten stationären Einheit, wie beispielsweise einem, den Transportablauf koordinierenden übergeordneten Leitsystem, z.B.: SIMATIC ® verbunden. Ganz besonders bevorzugt wird hierbei Industrial Ethernet. Dadurch ist eine datentechnisch robuste Einbindung in ein übergeordnetes, standardisiertes Datennetz und/oder Prozessleitsystem möglich. Die zentrale Einrichtung kann beispielsweise auch eine Archivierungsfunktion übernehmen und auch außerhalb des Werksgeländes angeordnet sein.

Von besonderem Vorteil kann es sein, wenn die Ortungseinrichtung durch ein Wegmesssystem gebildet ist. Dieses Wegmesssystem kann beispielsweise so ausgebildet sein, dass ein wagenseitig angeordnetes Messsystem eine parallel zur Schienentrasse geführte Wegmarke fortwährend abtastet. Dabei können beispielsweise optische oder induktive Messprinzipien zur Anwendung kommen.

Eine bevorzugte Ausführungsform kann dadurch gekennzeichnet sein, dass das Wegmesssystem einen fahrzeugseitig angeordneten Lesekopf umfasst, der eine längs der Schienentrasse angeordnete Codeschiene optoelektronisch abtastet.

Es kann hierbei von ganz besonderem Vorteil sein, wenn die Codeschiene mit einer absoluten Wegkodierung codiert ist. Dadurch wird erreicht, dass zur Bestimmung des momentanen Aufenthaltsortes eines Transportwagens nicht ein Nullpunkt beziehungsweise ein Referenzpunkt angefahren werden muss.

Gemäß einer bevorzugten Ausführung der Erfindung ist das Schienensystem zweisträngige ausgebildet. Auf den beiden Schienensträngen befinden sich gleichzeitig stets mehrere Bundtransport-Wagen, die jeweils selbstständig von der zugeordneten Antriebseinheit, z.B. einem Elektroantrieb angetrieben werden. Die beiden Schienentrassen können mit der oben dargestellten absoluten Wegemesseinrichtung ausgestattet sein. Beladene Transportwagen befinden sich dabei stets auf einem ersten Schienenstrang, unbeladene auf einem zweiten Schienenstrang. Jeder dieser Schienenstränge wird jeweils nur in einer Fahrtrichtung befahren. Dies erleichtert die Koordination und erhöht die Flexibilität des Transportsystems.

Vorteilhaft kann eine Ausführungsform sein, bei der die Antriebseinrichtung ein Elektromotor ist, der beispielsweise von einem Stromrichter gesteuert ist und wobei die Energieversorgung mittels einer entlang der Trasse ausgebildeten Schleifleitung erfolgt. Eine Energiezufuhr über eine parallel zum Verkehrsweg verlaufende Schleifleitung beziehungsweise Stromschiene ist bei herkömmlichen Schienenfahrzeugen hinlänglich bekannt. Hierbei bietet es sich an, die Stromschiene zusammen mit der Codeschiene des Wegmesssystems in einem geschützten Kanal zu führen. Dadurch ist die Codeschiene vor mechanischen Einwirkungen gut geschützt.

Um die Flexibilität des Transportsystems weiter zu verbessern kann es vorteilhaft sein, wenn so genannte Übergabe- oder Schiebestationen eingerichtet sind, mittels derer ein Transportwagen zwischen dem einen und dem anderen Schienenstrang - oder auch von einem Schienenstrang heraus in eine Parkposition - verschiebbar ist. Dadurch ist es möglich, je nach Bedarf Transportwagen in das Transportsystem ein-oder auszuschleusen. Technisch kann dies beispielsweise durch ein quer zur Fahrtrichtung verschiebbares Gleis-Segment realisiert sein. Indem jeweils am Trassen-Kopf 9 eine solche Schiebestation angeordnet ist, können die Transportwagen in einem Umlaufsystem betrieben werden.

Um die Bewegungsrichtung eines Transportwagens auf dem Verkehrsweg zu ändern, werden bevorzugt so genannte Drehtische ("Turntable") eingesetzt, mittels derer ein darauf befindlicher Transportwagen für die Weiterfahrt in Richtung eines sich anschließenden Streckenabschnittes gedreht, das heißt ausgerichtet werden kann.

In einem weiteren Aspekt betrifft die Erfindung auch ein Verfahren zum Transport von Metallbunde, wobei die Metallbunde mittels Transportwagen auf einem mehrsträngigen Schienensystem transportiert werden und umfasst folgende Verfahrensschritte:
- Ermitteln einer Ortsinformation eines jeden Transportwagens mittels einer Ortungseinrichtung;
- Übertragen dieser Ortsinformation an eine zentrale Steuereinrichtung;
- Erzeugen einer Steuerinformation durch die Steuereinrichtung zum Steuern der Antriebsvorrichtung eines Transportwagens, wobei von der Steuereinrichtung die Ortsinformation zumindest eines der auf dem Schienensystem befindlichen Transportwagen berücksichtigt wird;
- Herstellen einer Kommunikationsverbindung zwischen der zentralen Steuereinrichtung und zumindest einer bordseitig angeordneten Kommunikationseinrichtung;
- Übermitteln der Steuerinformation von der Steuereinrichtung an die zumindest eine bordseitig angeordnete Kommunikationseinrichtung, wobei die Übermittlung zumindest abschnittsweise leitungslos durchgeführt wird.

Indem fortlaufend der Aufenthaltsort eines jeden Transportwagens auf dem Schienensystem ermittelt und der Steuereinrichtung zugeleitet wird, ist der Transportvorgang aus der Ferne steuerbar. Zum Zweck der Steuerung übermittelt die zentrale Steuereinrichtung an die mobilen Kommunikationseinrichtungen die entsprechenden Steuerinformationen. Dadurch kann die Bewegung der Transportwagen an die jeweils vorherrschenden Anforderungen sehr gut angepasst werden. Kommt es beispielsweise in der Ladezone zu einer Anhäufung der zu transportierenden Metallbunde, so können in einer Parkposition befindliche Transportwagen in das Schienensystem eingeschleust werden und dadurch die Spitzenlast durch eine zeitweilige Erhöhung der Verkehrsdichte der Transportwagen aufgefangen werden.

In einem weiteren Aspekt betrifft die Erfindung einen führerlosen, schienengeführten Transportwagen zum Transport von Metallbunde, insbesondere zum Transport von Warmbunde, welcher mittels einer Antriebsvorrichtung auf einem mehrsträngigen Schienensystem verfahrbar ist, wobei dem Transportwagen eine bordseitig angeordnete Kommunikationseinrichtung zugeordnet ist, mittels derer eine Kommunikationsverbindung zu einer stationär angeordneten Steuereinrichtung herstellbar ist, wobei diese Kommunikationsverbindung zumindest in einem Abschnitt leitungslos ausgebildet ist. Die Position eines einzelnen Transportwagens auf dem Schienensystem lässt sich vorteilhaft mittels einer am Transportwagen mitgeführten Messeinrichtung in Verbindung mit einer trassenseitig angeordneten Wegmarkierung ermitteln. Wenn die Wegmarkierung in einem absoluten Maß codiert ist, entfällt die aufwändige Bestimmung eines Referenzpunktes. Mit anderen Worten, der Transportwagen kennt zu jedem Zeitpunkt seinen aktuellen absoluten Aufenthaltsort auf dem Schienensystem und kann diese Orteinformation an eine Zentrale übermitteln. Die Mobilfunkverbindung zwischen Transportwagen und stationären Sende - und Empfangseinrichtungen ermöglicht eine zentrale Steuerung des Transportvorgangs, der an unvorhergesehene Ereignisse besser angepasst werden kann.

Bevorzugt erfolgt die Funkkommunikation zwischen einer Antenne des bordseitigen Kommunikationsgerätes und einem oder mehrerer trassenseitig angeordnete Leckwellenleiter. Um Reflexionen auf dem Leckwellenleiter zu vermeiden, ist dieser mit einem geeigneten Abschlusswiderstand abgeschlossen. Um den Leckwellenleiter möglichst gut zu schützen, kann dieser in einem Rohr oder Kabelkanal, beispielsweise im Fundament der Werkshalle angeordnet sein. Bevorzugt ist dabei eine Abdeckung, welche für elektromagnetische Strahlung durchlässig ist. Dadurch kann der Leckwellenleiter auch in einer rauen Industrieumgebung eingesetzt werden.

Es kann ferner günstig sein, wenn jedem Transportwagen ein spezieller logischer Kanal zugeordnet ist. Dies verbessert die Effizienz der Kommunikation.

Mit Vorteil erfolgt die Kommunikation mit dem Leckwellenleiter in einem für derartige Anwendungen vorgesehenen industriellen Frequenzbereich von 2,4 GHz oder 5 bis 6 GHz.

### Kurzbeschreibung der Zeichnung

Zur weiteren Erläuterung der Erfindung wird im nachfolgenden Teil der Beschreibung auf die Zeichnungen Bezug genommen, aus denen weitere vorteilhafte Ausgestaltungen, Einzelheiten und Weiterbildungen der Erfindung anhand eines nicht einschränkenden Ausführungsbeispiels zu entnehmen sind.

Es zeigen:
- Figur 1: eine schematische Darstellung eines Ausführungsbeispiels der Erfindung als Bund-Transportsystem in einer Draufsicht auf den Trassenverlauf;
- Figur 2: einen Transportwagen zum Transport von Metallbunde der erfindungsgemäß mit einer mobilen Funkeinrichtung und einer Ortungseinrichtung ausgestattet ist;
- Figur 3: ein Blockschaltbild, welches in einer schematischen Darstellung die fahrzeugseitige Antriebs- und Kommunikationseinrichtung und die ortsfest angeordneten Leckwellenleiter samt der daran angeschlossenen weiteren Kommunikationseinrichtung beispielhaft zeigt;
- Figur 4: eine schematische Darstellung, welche in einer Querschnittzeichnung ein Ausführungsbeispiel der Positionsmesseinrichtung zum Messen der absoluten Position eines schienengeführten Transportwagens zeigt.

### Ausführung der Erfindung

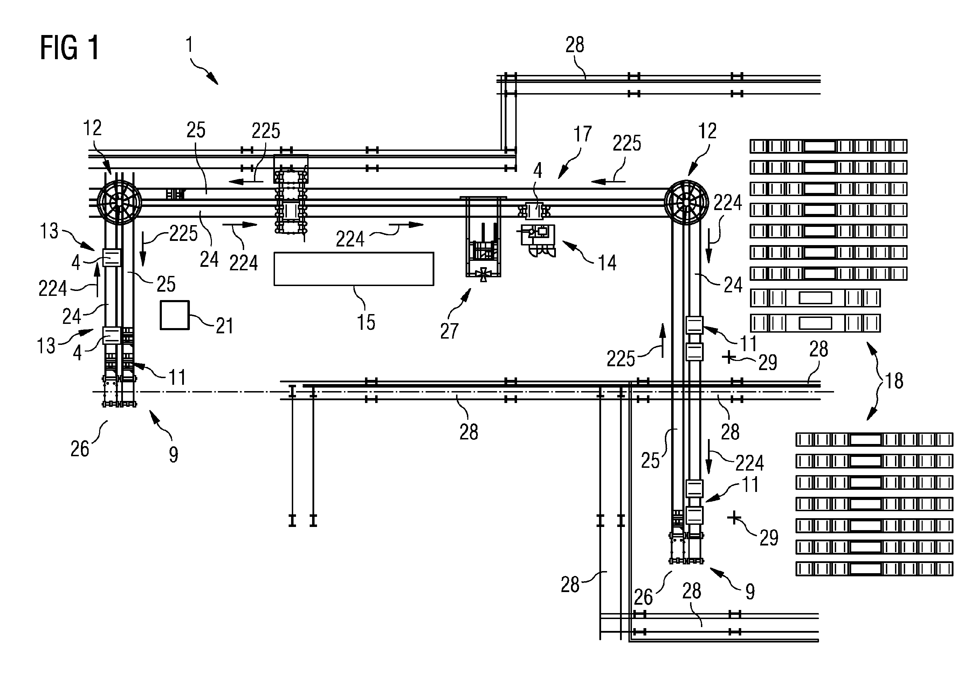

Die Figur 1 zeigt vereinfacht ein Ausführungsbeispiel des erfindungsgemäßen Transportsystems 1, das dem Transport von Metallbunde 4 dient. In einer Draufsicht ist ein Ausschnitt eines Trassenverlaufs eines Gleissystems 17 innerhalb einer Werkshalle zu sehen, in welcher Metallbunde 4 transportiert werden. Die Hallenbegrenzung 28 ist in der Zeichnung der Figur 1 mit einer dünnen Strichstärke angedeutet.

An zwei Haspel-Einrichtungen 13 (Down Coiler) wird jeweils ein nicht näher dargestelltes Blechband zugeführt (Beladungszone) und zu Bunde 4 gewickelt. Diese Bunde 4 werden auf Transportwagen 11 verladen und abtransportiert. Gemäß der Erfindung besteht das Schienensystem 17 aus zwei Trassen oder Schienensträngen 24 und 25. Je nach Beladungszustand werden die Transportwagen 11 einem dieser Schienenstränge 24, 25 zugeordnet. Im dargestellten Ausführungsbeispiel fahren die Transportwagen 11 in einem beladenen Zustand auf dem Schienenstrang 24 und in einem unbeladenen Zustand auf dem Schienenstrang 25.

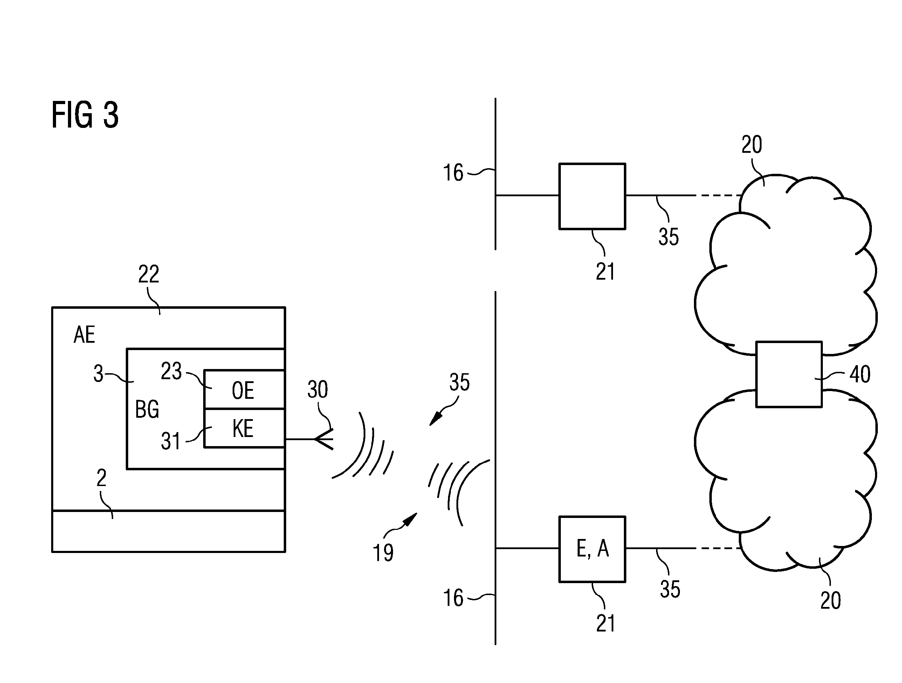

Die folgende Beschreibung beginnt mit der Bundaufnahme auf dem vertikalen Wegstück links im Bild der Figur 3. Zu sehen ist eine noch näher zu erläuternde Schiebestation 26 von wo die Trasse nach oben zu einem ersten Drehtisch 12 führt. Daran schließt sich ein horizontal verlaufender Streckenabschnitt an. Entlang dieses horizontalen Streckenabschnitts führt der Weg vorbei an verschiedene Bearbeitungsstationen, wie beispielsweise einer Inspektionsstation 15, einer Augen-Umreifung 27 und einer Markier- und Wiegestation 14. Im Bild rechts der Figur 1 verläuft die Trasse dann wieder in einem vertikalen Streckenabschnitt. Die angelieferten Metallbunde werden von diesem vertikalen Streckenabschnitt mittels eines Krans 29 in eines der Lager 18 transportiert (Entladungszone). Dieser zweite vertikale Streckenabschnitt endet wieder an einer Schiebestation 26. Mittels der Schiebestation 26 schließt sich das Umlaufsystem der Transportwagen 11.

Greift man beispielhaft einen Transportwagen 11 aus dem Transportsystem 1 heraus, so kann der Transportvorgang wie folgt beschrieben werden:
Die von der Haspel-Einrichtung 13 bereitgestellten Metallbunde 4 werden zunächst auf Transportwagen 11 auf dem Schienenstrang 24 verladen und in Richtung des Pfeils 224 transportiert. Der erste Drehtisch 12 ändert die vertikal verlaufende Transportrichtung in eine horizontal verlaufende.
Der zuvor aufgeladene Metallbund wird nun auf dem in Figur 1 horizontal verlaufenden unteren Schienenstrang 24 in Richtung des horizontalen Pfeils 224 zunächst zur Bundinspektion 15 transportiert. Um den Transportweg freizugeben wird der Transportwagen 11 samt dem darauf aufliegenden Metallbund 4 quer zur Transportrichtung 224 nach unten verschoben. Analog hierzu erfolgt die Augen-Umreifung 27 beziehungsweise das Wiegen des Metallbundes 4 in der Station 14. Transportwagen 11 welche am zweiten Drehtisch 12 (in Figur 1 rechts) angekommen sind, erfahren abermals eine Änderung in ihrer Transportrichtung; nun führt im vorliegenden Beispiel der weiter Weg vertikal hinunter. Der Metallbund 4 wird nun auf dem in Figur 1 rechts liegenden Schienenstrang 24 in Richtung des vertikalen nach unten zeigenden Pfeils 224 transportiert.
Zwei Hebevorrichtungen 29 laden den antransportierten Metallbund 4 und bringen ihn zu einem zugeordneten Lager 18.
Am Ende des Wegstücks wird der nun leere Transportwagen 11 auf den zweiten Schienenstrang 25 geschoben. Dies erfolgt durch die Schiebestation 26 (Moveable Station) am Trassen-Kopf 9. Auf diese Weise wird Transportwagen-Umlaufsystem wieder geschlossen; der Transportwagen 11 ist wieder für die Rückfahrt eingespeist. Er fährt nun in einem leeren Zustand auf dem vertikal verlaufenden Streckenabschnitt 25 in Richtung des Pfeils 225 nach oben, in Richtung des zweiten Drehtischs 12. Nach Änderung seiner Bewegungsrichtung (horizontal verlaufender Abschnitt der Trasse in Figur 1) in Richtung des Pfeils 225 von rechts nach links hin zum ersten Drehtisch 12 und von dort, nach einer abermaligen Änderung der Bewegungsrichtung, vertikal hinunter in Richtung der ersten Schiebestation 26. Diese erste Schiebestation 26 setzt den unbeladene Transportwagen 11 wieder auf den für beladene Fahrzeuge vorgesehenen Schienenstrang 24, wo er in der Beladungszone erneut mit einem von der Haspel-Einrichtung 13 bereitgestellten Blechbund 4 beladenen werden kann. Das Transportsystem ist damit in sich geschlossen.

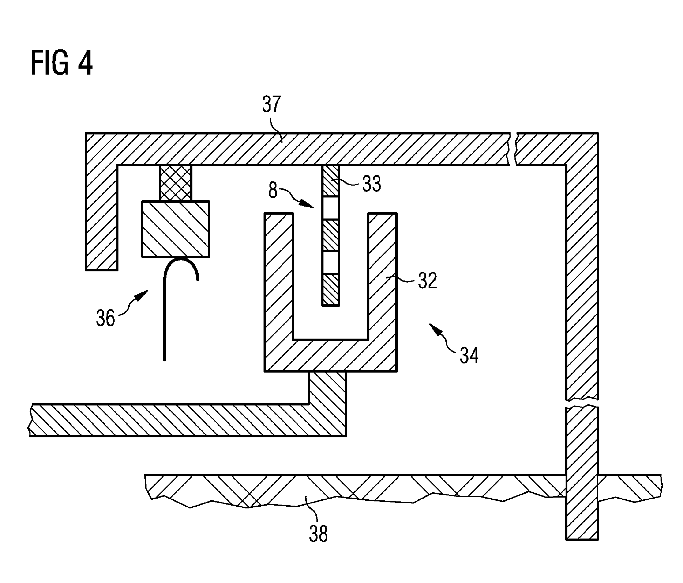

Der Antrieb der Transportwagen 11 erfolgt mittels einer Antriebseinrichtung 22, die im wesentlichen aus einem Elektromotor 2 samt Getriebe und Steuerelektronik besteht, und von einem fahrzeugseitigen Bordgerät 3 angesteuert wird. Die Energiezufuhr erfolgt mittels einer Schleifleitung 36 (siehe Figur 4). Die Schleifleitung 36 ist entlang der Trasse verlegt. Derartige Einrichtungen sind bei Schienenfahrzeugen bekannt und brauchen hier nicht näher erläutert zu werden. Das Bordgerät 3 ist mit einer Ortungseinrichtung 23 und einer Kommunikationseinrichtung 31 ausgestattet. Diese Ortungseinrichtung 23 wird im Folgenden näher erläutert.

Die Ortungseinrichtung 23 besteht im vorliegenden Ausführungsbeispiel aus einem Weg-Messsystem 34 welches die absolute Position eines Transportwagens 11 auf dem Schienensystem 17 misst. Ein fahrzeugseitig angeordneter Lesekopf 32 (siehe Figur 4) tastet dabei optoelektronisch eine Codeschiene 33 mit einer absoluten Wegcodierung 8 ab, die zusammen mit der Schleifleitung 36 geschützt in einem Kanal bodenseitig längs der Trasse angeordnet ist. Auf diese Weise kennt das Bordgerät 3 stets seine aktuelle Position.

Die Kommunikationseinrichtung 31 besteht im Wesentlichen aus einer Sende- und einer Empfangs-Einrichtung mit einer Antenne 30. Dies ermöglicht in einem Abschnitt 35 eine Funkkommunikation mit stationären Einrichtungen, den Leckwellenleitern 16. Im vorliegenden Beispiel ist das Funknetz 19 nach dem Standard Industrial Wireless LAN für die mit Leckwellenleiter 16 ausgebildet. Als Leckwellenleiter 16 wird eingesetzt der Typ RCoax, wie er im Systemhandbuch "simatic net", Siemens AG, 2005, beschrieben ist. Der Leckwellenleiter 16 ist jeweils längst des Schienenstrangs 24 und 25 verlegt. Dadurch kann die aktuelle Position eines jeden Transportwagens 11 vom Datennetz 20 abgefragt bzw. an die Zentrale 40 im Datennetz 20 übermittelt werden. Der Transportvorgang kann dadurch auf dem Schienensystem 17 von Ferne gesteuert werden. Das heißt, die zentrale Steuereinrichtung 40 kann zu der Antriebsvorrichtung eines jeden Transportwagens 11 Sollwerte einer Fahrgeschwindigkeit, und/oder Beschleunigungs- Verzögerungsrampen oder eine SollPositionen übertragen. Vom Bordgerät 3 können auch andere dort vorhandene Daten abfragt werden. Es können Transportwagen 11 aus dem Transportweg ausgeschleust und in eine Parkposition gebracht werden, von der sie bei Bedarf wieder aktiviert werden. Ebenso können Transportwagen 11 im Falle einer Störung einer Bearbeitungsstation zu einer anderen intakt befindlichen dirigiert werden. Insgesamt ist dadurch das Transportsystem 1 sehr flexibel und kann sich leicht an vorherrschende Produktionsbedingungen beziehungsweise Gegebenheiten auf dem Transportweg anpassen. Die drahtlose Datenübertragung zwischen der fahrzeugseitigen Kommunikationseinrichtung 31 und dem Leckwellenleiter 16 kennt keinen Verschleiß. Der Leckwellenleiter 16 kann leicht in einem geschützten Kanal untergebracht werden. Dadurch ist der Leckwellenleiter 16 gegen mechanische Beschädigungen gut geschützt. Die Übertragungsfrequenz im Funknetz 19 kann bevorzugt in industriellen Zwecken zugewiesenen Frequenzbändern von 2,4 GHz und 5 bis 6 GHz liegen.

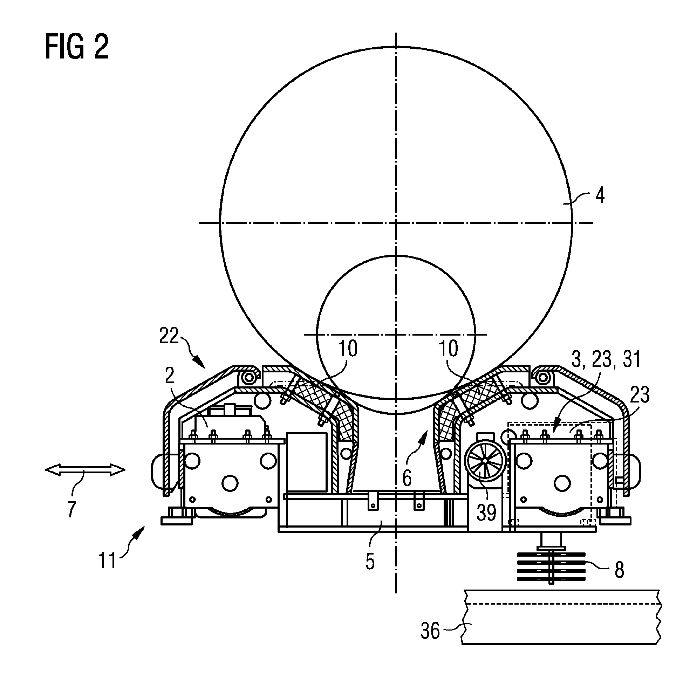

Die Figur 2 zeigt in einer Schnittdarstellung einen Transportwagen 11, der ein Fahrzeugchassis 5 mit einem Tragsattel 6 zum Transport eines Metallbundes 4, insbesondere zum Transport eines Warmbundes ausgestattet ist. Ein solcher Metall- beziehungsweise Warmbund 4 kann unterschiedlich groß sein. Der Transportwagen 11 ist entsprechend ausgebildet. Der Transportwagen 11 ist Richtung des Pfeils 7 auf dem Fahrschienensystem 17 verfahrbar. Wie bereits oben dargestellt, ist der Transportwagen 11 erfindungsgemäß mit Einrichtungen zur Kommunikation und Ortung 3, 23 und 31 ausgestattet. Um den elektrischen Antrieb 2 samt Steuerelektronik und das Bordgerät 3 vor Wärmeeinwirkung zu schützen, ist die zum Bund 4 hin weisende Schrägfläche des Tragsattels 6 mit einem Hitzeschild 10 versehen beziehungsweise aus diesem gebildet. Zusätzlich sorgt ein Ventilator 39 für ausreichende Kühlung der elektronischen Bauteile.

Wie Figur 3 nochmals in einem Blockschaltbild veranschaulicht, ist jedem Transportwagen 11 jeweils eine Antriebseinrichtung 22, ein Bordgerät 3 mit einer Ortungseinrichtung 23 und einer Kommunikationseinrichtung 31 zugeordnet. Die Datenübertragung zu den bodenseitig verlegten Leckwellenleitern 16 erfolgt mittels einer Antenne 30 über eine Funkschnittstelle 19. Jeder Leckwellenleiter 16 ist einseitig reflexionsfrei abgeschlossen und mit einem stationären Basisgerät 21 verbunden. Nicht näher dargestellte Leitungen verbinden jedes Basisgerät 21 mit einer zentralen Steuereinheit 40 im übergeordneten Datennetz 20.

Die Figur 4 zeigt in einer Schnittdarstellung eine mögliche Ausführungsform der Wegemesseinrichtung 34. Auf einer ortsfesten Halterung 37 ist die Codeschiene 33 befestigt. Die Halterung 37 dient gleichzeitig als Abdeckung und ist im Fundament 38 bodenseitig verankert. Der Lesekopf 32 ist mit dem Transportwagen 11 verbunden. Er umgreift die Codeschiene 33 von unten und tastet durch nicht näher dargestellte optoelektronische Bauelemente die Codeinformation der Codeschiene 33 ab. Die Codeinformation ist eine absolute Wegcodierung 8 und in Form von Durchbrechungen auf der Codeschiene 33 realisiert. Die an einer bestimmten Stelle des Schienensystems 17 abgetastete Codeinformation entspricht einer absoluten Position des Wagens 11. Diese wird, gegebenenfalls nach einer Signalaufbereitung, über die Funkschnittstelle 19 zum Leckwellenleiter 16 übertragen. Von dort gelangte sie zu einer abgesetzten, den Transportablauf koordinierenden zentralen Steuereinrichtung 40. In Figur 4 ist auch die Schleifleitung 36 angedeutet, mittels derer in an sich bekannter Weise die Energiezufuhr zum Elektromotor 2 des Transportwagens 11 erfolgt.

Das erfindungsgemäße Bundtransport-System weist eine Reihe von Vorzügen auf.

Die erfindungsgemäße Kommunikationsmöglichkeit schafft in Verbindung mit der Ortungseinrichtung die Möglichkeit, den Transportablauf von der Ferne aus zu steuern und zu überwachen im Krisenfall ist eine effiziente Eingriffsmöglichkeit in den Transportablauf gegeben. Dies erhöht die Flexibilität und Verfügbarkeit des Transportsystems.

Die zweisträngige Ausführung des Schienensystems schafft den Vorteil, dass das mehrmalige Anheben und Ablegen des Metallbundes auf dem Transportweg wegfällt. Ein Bund 4 wird in einer Beladungszone nach dem Aufhaspeln (Down Coiler) 13 auf den Wagen 11 aufgelegt und erst zum Schluss in einer Entladungszone mittels eines Krans entnommen und in das Bundlager 18 verbracht. Das heißt, der Bund 4 bleibt auf dem Transportgerät liegen, auf dem er zu Beginn des Transports aufgelegt wurde. Folglich treten weniger Beschädigungen auf. Unterschiedlich konstruierte Transportmittel und ein aufwändiges Umladen wie im Stand der Technik, fallen weg. Der Transport ist schnell und sicher.

Eine Adaption der Transportleistung an einen gestiegenen Bedarf kann auf einfache Weise durch Bereitstellung zusätzlicher Transportwagen 11 erfolgen, die in einer nicht näher dargestellten Parkposition bereitgehalten werden.

Eine weitere Vereinfachung ergibt sich daraus, dass für das Schienesystem 17 die aufwändige Medientechnik (Pneumatik, Hydraulik) wegfallen kann, was vor allem bei entfernt liegenden Aggregaten den Vorteil bietet, an diesen Stellen auf zusätzliche Pumpenstationen, Ventilstände oder Kompressoren oder dgl. verzichten zu können.

Eine bevorzugte Anwendung des oben dargestellten Transportsystems beziehungsweise Verfahrens liegt auf dem Gebiet der Warm- und Kaltwalztechnik im Blech- oder Aluminiumbereich. Es versteht sich aber, dass die Verwendung des oben beschriebenen Bundtransport-Systems nicht auf Flachwalzgut und Blechbunde eingeschränkt ist, sonder auch überall dort anwendbar ist, wo eine ähnlich gelagerte Problemstellung zugrunde liegt.

Zusammenstellung der verwendeten Bezugszeichen

| | |
|---|---|
| 1 | Transportsystem |
| 2 | Elektromotor, Antriebseinheit |
| 3 | Bordgerät |
| 4 | Transportgut, Metallbund |
| 5 | Fahrzeugchassis |
| 6 | Tragsattel |
| 7 | Bewegungsrichtung |
| 8 | absolute Wegcodierung |
| 9 | Trassen-Kopf |
| 10 | Hitzeschild |
| 11 | Transportwagen, Bundtransport-Wagen |
| 12 | Drehtisch (Turntable) |
| 13 | Haspel (Down Coiler) |
| 14 | Bundmarkierung, Wiegestation |
| 15 | Bundinspektion |
| 16 | Leckwellenleiter |
| 17 | Schienensystem |
| 18 | Lager (Coil Storage) |
| 19 | Kommunikationsverbindung, Funkverbindung |
| 20 | Netzwerk |
| 21 | Basisstation (Access Point) |
| 22 | Antriebseinrichtung |
| 23 | Ortungseinrichtung |
| 24 | Fahrschiene für Bundtransport-Wagen mit Bund, erster Schienenstrang |
| 25 | Fahrschiene für leere Bundtransport-Wagen, zweiten Schienenstrang |
| 26 | Schiebestation |
| 27 | Augenumreifung |
| 28 | Hallenbegrenzung |
| 29 | Hebevorrichtung, Kran |
| 30 | Antenne |
| 31 | Kommunikationseinrichtung |
| 32 | Lesekopf |
| 33 | Codeschiene |
| 34 | Weg-, Positionsmesssystem |
| 35 | leitungslose Abschnitt der Kommunikationsverbindung |
| 36 | Schleifleitung, Stromschiene |
| 37 | Halterung, Abdeckung |
| 38 | Fundament |
| 39 | Ventilator |
| 40 | zentrale Steuereinrichtung |

## Patentansprüche

1. Transportsystem zum Transport von Metallbunde (4), insbesondere Warmbunde, umfassend:
- ein mehrsträngiges Schienensystem (17);
- mehrere führerlose Transportwagen (11), welche mittels einer Antriebseinrichtung (22) auf dem Schienensystem (17) verfahrbar sind und mit einer bordseitig angeordneten Kommunikationseinrichtung (31) ausgestattet sind;
- eine Ortungseinrichtung (23), mit welcher zu jedem auf dem Schienensystem (17) befindlichen Transportwagen (11) eine aktuelle Ortsinformation ermittelbar ist;
- eine zentrale Steuereinrichtung (40), welcher die Ortsinformation eines jeden Transportwagens (11) zuführbar ist, wobei zwischen der Steuereinrichtung (40) und jeder Kommunikationseinrichtung (31) eine Kommunikationsverbindung (19) herstellbar ist, welche zumindest abschnittsweise leitungslos ausgebildet ist.

2. Transportsystem nach Anspruch 1, **dadurch gekennzeichnet, dass** die Kommunikationsverbindung (19) über zumindest einen trassenseitig angeordneten Leckwellenleiter (16) geführt ist.

3. Transportsystem nach Anspruch 2, **dadurch gekennzeichnet, dass** der zumindest eine Leckwellenleiter (16) mittels elektrischer Leitungen mit einer Basisstation (21) verbunden ist.

4. Transportsystem nach Anspruch 1, **dadurch gekennzeichnet, dass** die Ortungseinrichtung (23) ein trassengeführtes Wegmesssystem (34) ist.

5. Transportsystem nach Anspruch 4, **dadurch gekennzeichnet, dass** das Wegmesssystem (34) aus einem fahrzeugseitig angeordneten Lesekopf (32) und einer trassenseitig angeordneten Codeschiene (33) gebildet ist.

6. Transportsystem nach Anspruch 5, **dadurch gekennzeichnet, dass** die Codeschiene (33) mit einer absoluten Wegcodierung (8) codiert ist.

7. Transportsystem nach einem der Ansprüche 1 bis 6, **dadurch gekennzeichnet, dass** das Schienensystem (17) zweisträngige ausgebildet ist, wobei beladene Transportwagen (11) einem ersten Schienenstrang (24) und unbeladene Transportwagen (11) einem zweiten Schienenstrang (25) zugeordnet sind.

8. Transportsystem nach Anspruch 7, **dadurch gekennzeichnet, dass** die Antriebseinrichtung (22) ein von einer Leistungselektronik angesteuerter Elektromotor ist, dessen Energieversorgung mittels einer trassenseitig angeordneten Schleifleitung (36) hergestellt ist.

9. Transportsystem nach Anspruch 7, **gekennzeichnet durch** zumindest eine Schiebestation (26), mittels derer ein Transportwagen (11) zwischen dem ersten Schienenstrang (24) und dem zweiten Schienenstrang (25) oder von einem der Schienenstränge (24,25) in eine Parkposition verschiebbar ist.

10. Transportsystem nach Anspruch 7, **gekennzeichnet durch** zumindest einen Drehtisch (12) mittels dessen die Bewegungsrichtung eines Transportwagens (11) auf einem der Schienenstränge (24, 25) änderbar ist.

11. Verfahren zum Transport von Metallbunde (4), insbesondere von Warmbunde, welche mittels von einer Antriebsvorrichtung (22) angetriebenen, führerlose Transportwagen (11) auf einem mehrsträngigen Schienensystem (17) transportierbar sind, umfassend Folgende Schritte:
- Ermitteln einer Ortsinformation eines jeden Transportwagens (11) mittels einer Ortungseinrichtung (23);
- Übertragen dieser Ortsinformation an eine zentrale Steuereinrichtung (40);
- erzeugen einer Steuerinformation zum Steuern der Antriebsvorrichtung (22) durch die zentrale Steuereinrichtung (40), wobei die Ortsinformation zumindest eines der auf dem Schienensystem befindlichen Transportwagen (11) berücksichtigt wird;
- Herstellen einer Kommunikationsverbindung (19) zwischen der zentralen Steuereinrichtung (40) und zumindest einer bordseitig angeordneten Kommunikationseinrichtung (31);
- Übermitteln der Steuerinformation von der Steuereinrichtung (40) an die zumindest eine bordseitig angeordnete Kommunikationseinrichtung (31), wobei die Übermittlung über die Kommunikationsverbindung (19), die zumindest in einem Abschnitt (35) als Funkverbindung ausgebildet ist, durchgeführt wird.

12. Verfahren nach Anspruch 11, **dadurch gekennzeichnet, dass** die Kommunikationsverbindung (19) über zumindest einen trassenseitig angeordneten Leckwellenleiter (16) geführt wird.

13. Verfahren nach Anspruch 12, **dadurch gekennzeichnet dass** die Kommunikationsverbindung (19) über zumindest einen Leckwellenleiter mit angeschlossener, Basisstation (21) geführt wird.

14. Verfahren nach Anspruch 1 oder 13, **dadurch gekennzeichnet, dass** die Ortungseinrichtung (23) durch ein trassengeführtes Wegmesssystem (34) gebildet wird.

15. Verfahren nach Anspruch 14, **dadurch gekennzeichnet, dass** die Ortsinformation eines Transportwagens (11) mittels eines fahrzeugseitig angeordneten Lesekopfs (32) und einer trassenseitig angeordneten Codeschiene (33) optoelektronisch abgetastet wird.

16. Verfahren nach Anspruch 15, **dadurch gekennzeichnet, dass** der Lesekopf (32) eine Codeschiene (33) mit einer absoluten Wegcodierung abtastet.

17. Verfahren nach einem der Ansprüche 1 oder 14, **dadurch gekennzeichnet, dass** ein zweisträngiges Schienensystem (17) verwendet wird, wobei beladene Transportwagen (11) einem ersten Schienenstrang (24) und unbeladene Transportwagen (11) einem zweiten Schienenstrang (25) zugeordnet werden.

18. Verfahren nach Anspruch 17, **dadurch gekennzeichnet, dass** als Antriebseinrichtung (22) ein von einer Leistungselektronik angesteuerter Elektromotor verwendet wird, dessen Energie mittels einer trassenseitig angeordneten Schleifleitung (36) zugeführt wird.

19. Verfahren nach Anspruch 1, **dadurch gekennzeichnet, dass** eine Schiebestation (26) verwendet wird, mittels derer ein Transportwagen (11) zwischen dem ersten Schienenstrang (24) und dem zweiten Schienenstrang (25) oder von einem der Schienenstränge (24,25) in eine Parkposition verschoben wird.

20. Verfahren nach Anspruch 1, **dadurch gekennzeichnet, dass** die zentrale Steuereinrichtung (40) jeder Kommunikationseinrichtung (31) eines Transportwagens (11) einen logischen Kanal zuordnet.

21. Führerloser, schienengeführter Transportwagen (11) zum Transport von Metallbunde, insbesondere Warmbunde welcher mittels einer Antriebsvorrichtung (22) auf einem mehrsträngigen Schienensystem (17) verfahrbar ist, wobei dem Transportwagen (11) eine bordseitig angeordnete Kommunikationseinrichtung (31) zugeordnet ist, welche zur Datenübertragung über eine zumindest abschnittsweise leitungslos ausgebildete Kommunikationsverbindung (19) eingerichtet ist.

22. Transportwagen nach Anspruch 21, **dadurch gekennzeichnet, dass** die Kommunikationseinrichtung (31) zur Funkkommunikation mit einem trassenseitig angeordneten Leckwellenleiter (16) ausgebildet ist.

23. Transportwagen nach Anspruch 22, **dadurch gekennzeichnet, dass** die leitungslose Kommunikationsverbindung (19)in einem Frequenzbereich von 2,4 GHz oder 5 bis 6 GHz herstellbar ist.

24. Transportwagen nach einem der Ansprüche 21 bis 23, **gekennzeichnet durch** ein Fahrzeugchassis (5), welches einen Tragsattel (6) zur Aufnahme eines Metallbundes (4) aufweist, wobei zum Schutz eines Bordgeräts (3), in welchem die Kommunikationseinrichtung (31) enthalten ist, ein Hitzeschild (10) vorgesehen ist.
